# EUROPÄISCHE PATENTSCHRIFT

(11) **EP 1 595 679 B1**
(45) Veröffentlichungstag und Bekanntmachung des Hinweises auf die Patenterteilung: **19.03.2008**
(21) Anmeldenummer: 05007260.2
(22) Anmeldetag: 04.04.2005
(51) Int. Cl.: B29C 45/28

(54) **Abstützvorrichtung für Heisskanalwerkzeug und Heisskanalwerkzeug**
Supporting device for hot runner mould and hot runner mould
Dispositif de support pour moule à canal chauffé et moule à canal chauffé

(30) Priorität: 03.05.2004 DE 102004022036
(43) Veröffentlichungstag der Anmeldung: 16.11.2005
(73) Patentinhaber: Heitec- Heisskanaltechnik GmbH, 35099 Burgwald-Bottendorf (DE)
(72) Erfinder: Schreck, Hans, 35099 Burgwald-Bottendorf (DE)
(74) Vertreter: Böck, Bernhard

(56) Entgegenhaltungen:
- EP-A- 0 021 273
- EP-A- 0 407 683
- DE-U1-5202004 007 13

## Beschreibung

Die Erfindung betrifft eine Abstützvorrichtung zur Abstützung der Antriebszylinderplatte auf der Heißkanalplatte eines Heißkanalwerkzeugs zum Spritzen eines Kunststoffformteils nach dem Oberbegriff des Anspruchs 1 sowie ein damit ausgerüstetes Werkzeug nach dem Oberbegriff des Anspruchs 17.

Ein Heißkanalwerkzeug der in Rede stehenden Art zum Spritzen eines Kunststoffformteils weist zunächst einmal ein Formnest auf, in das der spritzfähige Kunststoff eingespritzt wird. Das Formnest ist mit mindestens einer düsenartigen Anspritzöffnung versehen, die durch eine Düsennadel geöffnet und geschlossen werden kann. Der spritzfähige Kunststoff wird dabei über mindestens einen Kanal, der im wesentlichen in einer heizbaren Heißkanalplatte verläuft, zur Anspritzöffnung geführt.

Es ist ein Heißkanalwerkzeug bekannt, das eine Antriebszylinderplatte aufweist, die mit Abstand zur Heißkanalplatte angeordnet ist und sich über ein Stützelement auf der Heißkanalplatte abstützt. Dabei werden sowohl die Heißkanalplatte als auch das Stützelement von der Düsennadel durchgriffen. Mit Ihrem von der Anspritzöffnung wegweisenden Ende ist die Düsennadel mit einem kolbenartigen Antrieb verbunden, der in der Antriebszylinderplatte vorgesehen ist. Nachteilig bei dieser bekannten Anordnung ist insbesondere, dass zum einen bei der thermisch bedingten Ausdehnung der Heißkanalplatte die Düsennadel einer Verformung unterliegt und zum anderen ein Austreten des plastifizierten bzw. schmelzflüssigen Kunststoffes durch den Düsennadelkanal in den Bereich des Düsennadelantriebs nicht auszuschließen ist, wodurch sich insbesondere eine Störung des Düsennadelantriebs und damit ein Versagen des Werkzeugs insgesamt ergeben kann.

Eine weitere Abstützvorrichtung ist aus EP-A-407 683 bekannt.

Ausgehend von diesem Stand der Technik ist es die Aufgabe der vorliegenden Erfindung, eine Abstützvorrichtung für ein gattungsgemäßes Heißkanalwerkzeug zuschaffen, mit der sich die Störanfälligkeit des Düsennadelantriebs und damit die Störanfälligkeit des Werkzeugs insgesamt verringern lässt.

Diese Aufgabe wird durch eine Abstützvorrichtung nach der Lehre des Anspruchs 1 gelöst.

Vorteilhafte Ausgestaltungen der Erfindung sind Gegenstand der Unteransprüche.

Die erfindungsgemäße Abstützvorrichtung zur Abstützung der Antriebszylinderplatte auf der Heißkanalplatte eines Heißkanalwerkzeugs zum Spritzen eines Kunststoffformteils weist in zunächst bekannter Weise mindestens ein Stützelement auf, das von mindestens einer Düsennadel des Heißkanalwerkzeugs in mindestens einer durchgehenden Ausnehmung mit radialem Spiel, bezogen auf die Längsachse der Düsennadel, durchgriffen wird. Dabei kann jeder Düsennadel ein eigenes Stützelement mit jeweils einer Ausnehmung zugeordnet sein oder aber mehrere Düsennadeln durchgreifen eine oder mehrere Ausnehmungen in einem Stützelement.

Gemäß der Erfindung ist mindestens ein die Düsennadel im wesentlichen dichtend umgreifendes Dichtelement vorgesehen, das mit radialem Spiel und insbesondere radial beweglich sowie axial im wesentlichen fixiert in der Ausnehmung des Stützelementes angeordnet ist. Dabei sind die Relativangaben "axial" und "radial" im Bezug zur Längsachse der Düsennadel zu verstehen. Mit anderen Worten bedeutet dies, dass im Gegensatz zum Stand der Technik, bei dem eine Abdichtung der Düsennadel allenfalls in der Heißkanalplatte erfolgt, die Dichtwirkung nunmehr durch ein separates Dichtelement erzielt wird, das im Stützelement derart radial beweglich gehalten ist, dass eine thermische Ausdehnung der Heißkanalplatte in der Radialebene nicht zu einer unerwünschten Verformung der Düsennadel führt oder diese zumindest reduziert. Zudem wird durch die Anordnung des Dichtelementes ein unerwünschtes Austreten des plastifizierten bzw. aufgeschmolzenen Kunststoffes in den Bereich des Düsennadelantriebs verhindert.

Die Gestalt des Stützelementes ist grundsätzlich beliebig, solange zum einen die ausreichende Abstützung der Antriebszylinderplatte auf der Heißkanalplatte und zum anderen die vorstehend beschriebene radial bewegliche Lagerung des Dichtelementes sichergestellt ist. Nach einem bevorzugten Ausführungsbeispiel jedoch weist das Stützelement eine im wesentlichen topfartige Gestalt mit einem Boden und einer den Boden im wesentlichen geschlossen oder unterbrochen umlaufenden Zarge auf, wobei die durchgehende Ausnehmung im Boden des Stützelementes angeordnet ist. Dabei ist vorzugsweise das Stützelement derart im Werkzeug angeordnet, dass es im Bereich seines Boden an der Heißkanalplatte anliegt oder an dieser aufliegt und kragenseitig an der Antriebszylinderplatte zur Anlage gelangt.

Das Stützelement kann beispielsweise in der Aufsicht rechteckig, quadratisch, polygon oder dergleichen sein. Vorzugsweise jedoch weist das Stützelement eine im wesentlichen kreisförmige oder kreiszylindrische Gestalt auf.

Die Gestalt der Ausnehmung ist zunächst auch grundsätzlich beliebig. Vorzugsweise jedoch weist die durchgehende Ausnehmung eine im wesentlichen kreisförmige Gestalt auf.

Im einfachsten Fall kann die Abstützvorrichtung lose zwischen der Antriebszylinderplatte und der Heißkanalplatte angeordnet sein. Nach einem besonders bevorzugten Ausführungsbeispiel jedoch weist das Stützelement Mittel zur lösbaren Befestigung des Stützelementes an der Heißkanalplatte oder der Antriebszylinderplatte auf. Diese Mittel können beispielsweise im einfachsten Fall durch Befestigungsschrauben gebildet werden. Dies bedeutet, dass die Abstützvorrichtung bzw. das Stützelement an der Heißkanalplatte bzw. der Antriebszylinderplatte festgelagert ist, während die Lagerung an der gegenüberliegenden Antriebszylinderplatte bzw. Heißkanalplatte in bzw. parallel zu jeweiligen Plattenebene schwimmend bzw. beweglich erfolgt.

Um die Dichtwirkung der Abstützvorrichtung zum zwischen der Antriebszylinderplatte und der Heißkanalplatte gebildeten Raum zu verbessern, ist nach einem weiteren Ausführungsbeispiel die zur Heißkanalplatte weisende Fläche des Bodens des Stützelementes zumindest bereichsweise als Dichtfläche ausgebildet, die an der zur Antriebszylinderplatte weisenden Fläche der Heißkanalplatte im wesentlichen dichtend zur Anlage bringbar ist.

Nach einem weiteren Ausführungsbeispiel ist in der zur Heißkanalplatte weisenden Fläche des Bodens eine absatzartige die durchgehende Ausnehmung im wesentlichen vollständig ringförmig umgreifende Vertiefung ausgebildet. Durch diese Gestaltung kann das Dichtelement im Stützelement in einfacher Weise auf die beschriebene Art und Weise radial beweglich und axial fixiert gehalten werden.

Die Gestalt des Dichtelementes ist grundsätzlich beliebig, solange zum einen die gewünschte Dichtwirkung zumindest an der Düsennadel und zum anderen die vorstehend beschriebene Lagefixierung im Stützelement gesichert ist. Vorzugsweise jedoch ist das Dichtelement scheiben- oder buchsenförmig ausgebildet ist und weist einen Außendurchmesser auf, der zumindest geringfügig kleiner ist als der Innendurchmesser der durchgehenden Ausnehmung. Dadurch ist in einfacher Weise eine Relativbewegung zwischen Dichtelement und Stützelement in radialer Richtung möglich.

In einer besonders bevorzugten Ausgestaltung weist das Dichtelement einen bundartigen Ansatz auf, dessen Außendurchmesser größer als der Innendurchmesser der Ausnehmung und zumindest geringfügig kleiner als der Durchmesser der ringförmigen Vertiefung ist. Dadurch wird in einfacher Weise die axiale Fixierung des Dichtelementes bei gleichzeitiger radialer Beweglichkeit gewährleistet.

Um eine leichte Relativbewegung zwischen Dichtelement und Stützelement zu gewährleisten, ist nach einem weiteren Ausführungsbeispiel die Höhe des bundartigen Ansatzes zumindest geringfügig kleiner als die Tiefe der ringförmigen Vertiefung. Dies bedeutet mit anderen Worten, dass in axialer Richtung das Dichtelement zwischen Stützelement und Heißkanalplatte nach Art einer Spielpassung gelagert ist.

Um die Dichtwirkung der erfindungsgemäßen Abstützvorrichtung weiter zu verbessern, ist nach einem weiteren Ausführungsbeispiel die zur Heißkanalplatte weisende Fläche des Dichtelementes zumindest bereichsweise als Dichtfläche ausgebildet. Dadurch kann das Dichtelement nicht nur gegenüber der Düsennadel, sondern auch gegenüber der Heißkanalplatte dichtend wirken.

Nach einem besonders bevorzugten Ausführungsbeispiel der Erfindung ist in den zur Heißkanalplatte weisenden Flächen des Dichtelementes und/oder des Stützelementes jeweils mindestens ein Drainagekanal derart vorgesehen, dass eine gezielte Leckageverbindung zwischen der Düsennadel und dem zwischen der Antriebszylinderplatte und der Heißkanalplatte vorgesehenen Raum gebildet wird. Dadurch kann zum einen sichergestellt werden, dass kein plastifiziertes bzw. aufgeschmolzenes Kunststoffmaterial in axialer Richtung durch das Dichtelement in den Bereich des Düsennadelantriebs tritt, und zum anderen, dass eventuell durch den Kanal in der Heißkanalplatte, in dem die Düsennadel verläuft, austretendes Kunststoffmaterial in einen Bereich abgeleitet wird, in dem eine derartige Verschmutzung nicht stört und/oder bei Bedarf leicht entfernt werden kann.

Nach einem Ausführungsbeispiel sind diese Drainagekanäle im wesentlichen radial zur Düsennadelachse angeordnet und die zugeordneten Drainagekanäle von Dichtelement und Stützelement fluchten im wesentlichen. Dadurch kann die Ableitung von austretendem Kunststoffmaterial verbessert werden. Vorzugsweise können dabei eine Mehrzahl von Drainagekanälen im wesentlichen kreuz- oder sternförmig angeordnet sein.

Vorzugsweise besteht das Abstützelement aus einem Material mit schlechten Wärmeleiteigenschaften, insbesondere aus Titan, einer Titanlegierung oder aus Cr-Stahl. Dadurch kann eine unerwünschte Wärmeübertragung zwischen der Heißkanalplatte und der Antriebszylinderplatte minimiert werden.

Das Material des Dichtelementes ist zunächst beliebig, solange eine ausreichende Dichtwirkung erzielbar ist. So sind beispielsweise grundsätzlich Elastomerdichtungen denkbar. Insbesondere bei der Verarbeitung von Kunststoffen mit vergleichsweise hohen Erweichungs- bzw. Schmelztemperaturen besteht das Dichtelement vorzugsweise im wesentlichen aus Stahl, insbesondere demselben Stahl wie die Düsennadel.

Die Erfindung betrifft ferner ein Werkzeug zum Spritzen von Kunststoffformteilen in Heißkanaltechnik mit einer Heißkanalplatte, in der mindestens ein Kanal zur Zufuhr von spritzfähigem Kunststoff zu einer in ein Formnest mündenden Düse angeordnet ist, einer Antriebszylinderplatte, in der eine Düsennadeleinrichtung derart gelagert ist, dass die Düsennadel mittels eines Antriebs aus einer ersten Stellung, in der die Düse zumindest teilweise verschlossen ist, in eine zweite Stellung, in der die Düse geöffnet ist, bringbar ist, wobei mindestens eine die Antriebszylinderplatte auf der Heißkanalplatte zumindest teilweise abstützendes Abstützvorrichtung mit vorstehenden Merkmalen oder Merkmalskombinationen vorgesehen ist.

Im Folgenden wird die Erfindung anhand lediglich Ausführungsbeispiele zeigender Zeichnungen näher erläutert. Es zeigt
- Fig. 1: in schematischer teilweise aufgebrochener Teildarstellung ein Werkzeug zum Spritzen von Kunststoffformteilen in Heißkanaltechnik mit einem ersten Ausführungsbeispiel einer erfindungsgemäßen Abstützvorrichtung;
- Fig. 2: in vergrößerter Darstellung den Ausschnitt X gem. Fig. 1;
- Fig. 3: in nochmals vergrößerter Darstellung das Stützelement nach den Fig. 1 und 2; und
- Fig. 4: in schematischer vergrößerter Schnittdarstellung in teilweiser Darstellung ein zweites Ausführungsbeispiel einer erfindungsgemäßen Abstützvorrichtung.

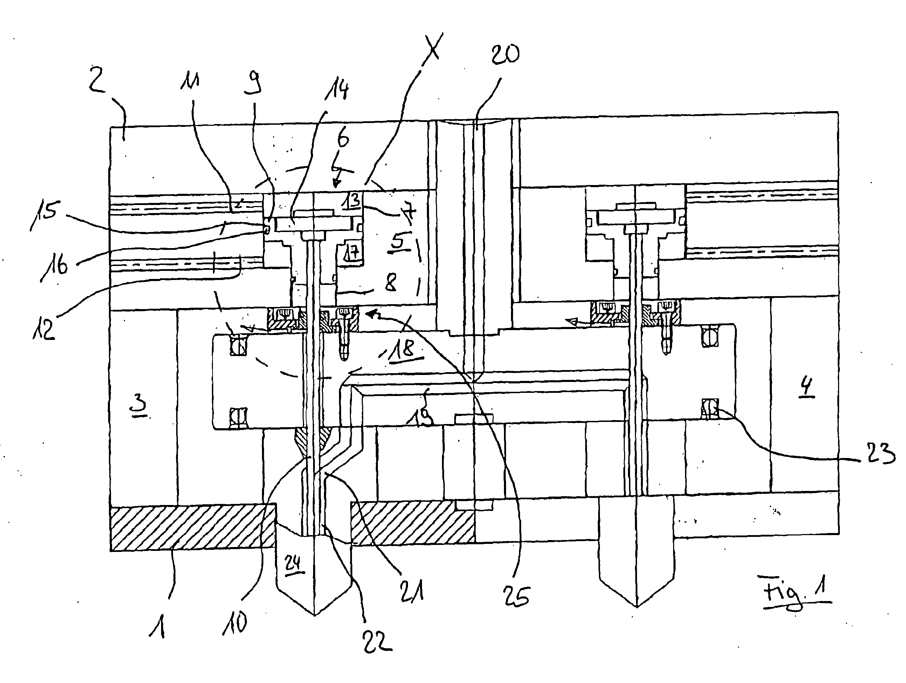

Das in Fig. 1 dargestellte Werkzeug weist einen rahmenartigen Aufbau mit einer Grundplatte 1, einer Deckplatte 2 und Seitenplatten 3 und 4 auf. In dem dadurch gebildeten Aufbau ist eine Antriebszylinderplatte 5 vorgesehen, die eine zylinderartige stufenförmige Ausnehmung 6 mit einem Bereich 7 größeren Durchmessers und einem Bereich 8 kleineren Durchmessers aufweist. In der zylinderartigen Ausnehmung 6 ist ein im Querschnitt stufenförmiger Kolben 9 verschieblich. Am Kolben 9 ist eine Düsennadel 10 derart befestigt, dass bei der Bewegung des Kolbens 9 in Richtung des Pfeils F die Düsennadel 10 in Richtung ihrer Längsachse bewegt wird. Die Betätigung des Kolbens 9 erfolgt über zwei pneumatische oder hydraulische Anschlussleitungen 11 und 12, wobei die Anschlussleitung 11 in den Raum 13 oberhalb der Kolbenplatte 14 und die Anschlussleitung 12 in den ringförmigen Raum 17 unterhalb der Kolbenplatte 14 mündet. Die Kolbenplatte 14 ist an ihrem Umfang mit einem in einer Ringnut 15 angeordneten Dichtring 16 versehen. Durch wahlweise gesteuerte Einleitung bzw. Ableitung eines fluidischen Mediums, beispielsweise Druckluft oder Hydrauliköl, durch die Anschlussleitungen 11 und 12 in den Raum 13 bzw. 17 kann der Kolben betätigt und damit die Düsennadel von ihrer Offen- in die Schließstellung und umgekehrt gebracht werden.

Im Raum unterhalb der Antriebszylinderplatte 5 ist eine Heißkanalplatte 18 im wesentlichen parallel zur Antriebszylinderplatte 5 angeordnet. Die Heißkanalplatte 18 weist einen Kanal 19 zur Zufuhr des plastifizierten bzw. schmelzflüssigen Kunststoffes auf. Der Kanal 19 ist an seinem ersten Ende 20 mit einer nicht dargestellten Vorrichtung zum Aufschmelzen des Kunststoffes verbunden und mündet mit seinem zweiten Ende 21 in den Düsenkanal 22, der im wesentlichen in einem Düsenkörper 24 angeordnet ist und wiederum in ein nicht dargestelltes Formnest mündet. Um ein Einfrieren des zugeführten Kunststoffmaterials in der Heißkanalplatte zu verhindern, ist die Heißkanalplatte 18 mit einer Heizeinrichtung 23 versehen.

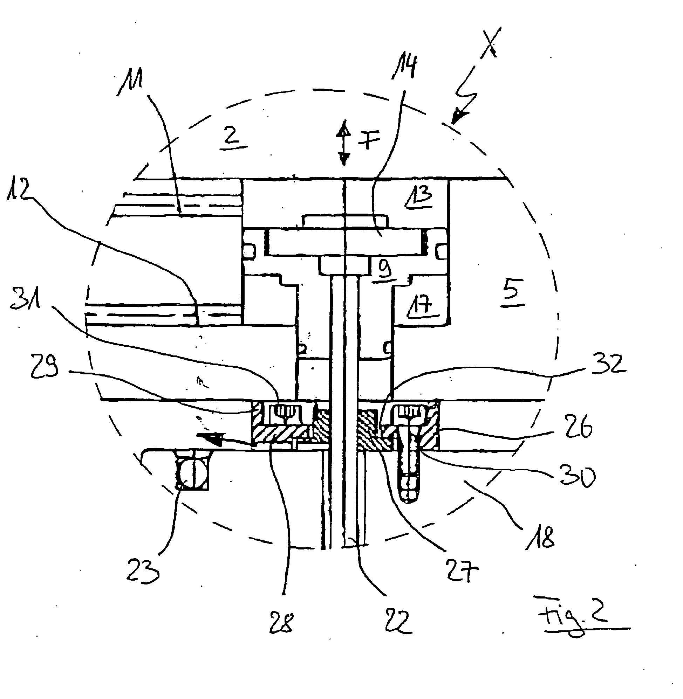

Zwischen der Heißkanalplatte 18 und der Antriebszylinderplatte 5 ist eine Abstützvorrichtung 25 zur Abstützung der Antriebszylinderplatte 5 auf der Heißkanalplatte 18 angeordnet. Wie insbesondere Fig. 2 zu entnehmen ist, weist die Abstützvorrichtung ein Stützelement 26 und ein Dichtelement 27 auf. Das Stützelement 26 weist eine im Querschnitt im wesentlichen topf- oder napfförmige kreiszylindrische Gestalt mit einem Boden 28 und einer kragenförmig geschlossen umlaufenden Zarge 29 auf. Mittels zweier Befestigungsschrauben 30, 31 ist das Stützelement 26 derart an der Heißkanalplatte 18 befestigt, dass der Boden 28 zur Heißkanalplatte 18 und der Kragen der Zarge 29 zur Antriebszylinderplatte 5 weist und dort jeweils zur Anlage gelangt.

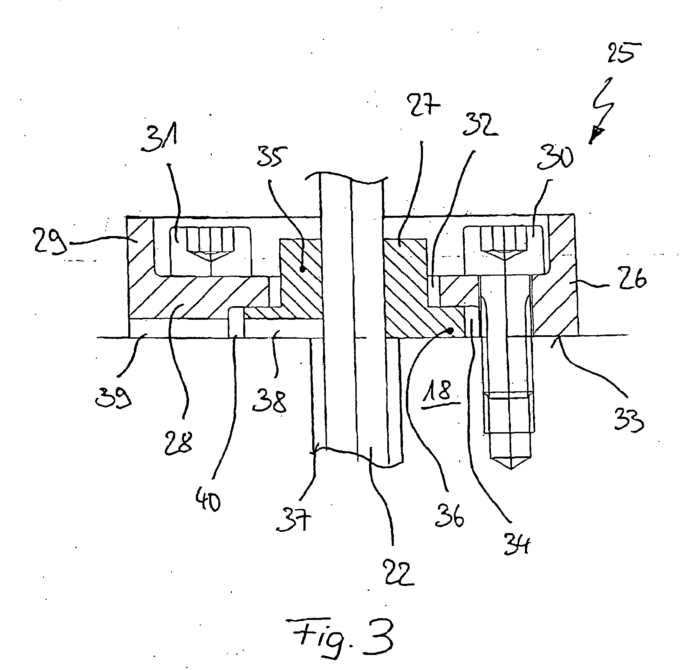

Wie insbesondere der Fig. 3 zu entnehmen ist, ist der Boden 28 des Stützelementes 26 ist mit einer durchgehenden im wesentlichen kreisförmigen Ausnehmung 32 versehen. In der zur Heißkanalplatte 18 weisenden Fläche 33 des Bodens 28 ist eine kreisförmige Vertiefung 34 vorgesehen, die die Ausnehmung 32 konzentrisch und ringförmig umschließt.

Das Dichtelement 27 weist einen buchsenförmigen Grundkörper 35 auf, der an seinem zur Heißkanalplatte 18 weisenden Ende mit einem bundartigen Ansatz 36 versehen ist. Das Dichtelement 27 umschließt dabei im wesentlichen radial abdichtend die Düsennadel 22, wobei jedoch die Düsennadel 22 in axialer Richtung im Dichtelement 27 im wesentlichen frei beweglich ist. Der Außendurchmesser des buchsenförmigen Grundkörpers 35 des Dichtelementes 27 zumindest geringfügig kleiner als der Durchmesser der Ausnehmung 32 und der Außendurchmesser des bundartigen Ansatzes 36 des Dichtelementes ist zumindest geringfügig kleiner als der Durchmesser der Vertiefung 34. Die axiale Höhe des bundartigen Ansatzes 36 ist ebenfalls geringfügig kleiner als die Tiefe der Vertiefung 34, so dass das Dichtelement 27 nach Art einer Spielpassung zwischen dem Stützelement 26 und der Oberfläche der Heißkanalplatte 18 in radialer Richtung zumindest geringfügig beweglich, in axialer Richtung jedoch im wesentlichen fixiert, gehalten wird.

Die Düsennadel durchgreift die Heißkanalplatte 18 in einer Ausnehmung 37 mit zumindest geringem radialen Spiel.

Erwärmt sich nun im Betrieb des Werkzeuges die Heißkanalplatte 18, dehnt diese sich in radialer Richtung, bezogen auf die Düsennadelachse, bzw. in Richtung der Heizkanalplattenebene aus. Da das Stützelement 26 an der Heizkanalplatte 18 mittels der Befestigungsschrauben 30, 31 fixiert ist, wandert das Stützelement 26 dabei um den Betrag der Wärmeausdehnung mit und gleitet mit seinem Zargenkragen nach Art eines Loslagers an der zur Heißkanalplatte 18 weisenden Fläche der Antriebszylinderplatte 5 entlang. Da das Dichtelement 27 radial im Stützelement beweglich ist und die Düsennadel mit radialem Spiel in der Ausnehmung 27 der Heißkanalplatte 18 verläuft, wirkt keine radiale Kraft und insbesondere kein Biegemoment auf die Düsennadel 22 und damit auf den Antrieb.

Wie ebenfalls der Fig. 3 zu entnehmen ist, weisen das Stützelement 26 und das Dichtelement 27 in ihrer zur Heißkanalplatte 18 weisenden Fläche jeweils einen Drainagekanal 38 bzw. 39 auf, wobei der Drainagekanal 38 von der Düsennadel 22 bis zum Ringspalt 40 und der Drainagekanal 39 vom Ringspalt 40 bis nach radial außen verläuft. Die beiden Drainagekanäle 38 und 39 fluchten dabei im wesentlichen. Wenn nun plastifiziertes oder schmelzflüssiges Kunststoffmaterial durch die Ausnehmung 37 in der Heißkanalplatte 18 in den Bereich der erfindungsgemäßen Abstützvorrichtung 25 gelangt, wird dieses durch die Drainagekanäle nach radial außen in den Raum zwischen Heißkanalplatte 18 und der Antriebszylinderplatte 5 geführt und zwar dergestalt, dass kein Kunststoffmaterial in den Bereich des Antriebs dringen kann. Dabei wirken die Dichtflächen zwischen Dichtelement 27, Heißkanalplatte 28 und Stützelement 26 nach Art einer Labyrinthdichtung zusammen.

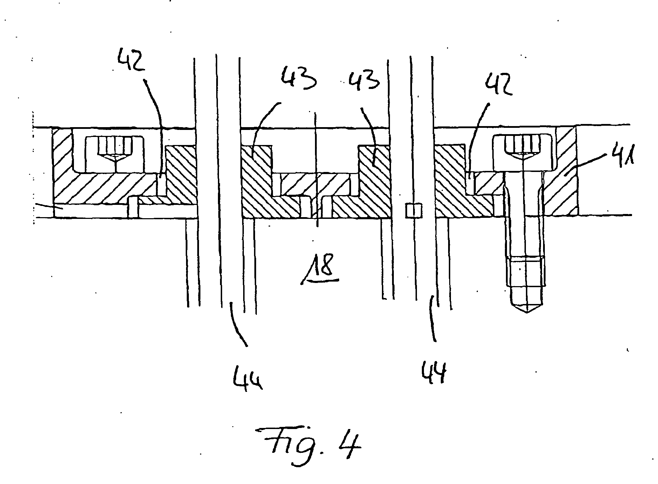

Das in der Fig. 4 dargestellte Ausführungsbeispiel einer erfindungsgemäßen Abstützung weist grundsätzlich den gleichen Aufbau wie das in den Fig. 1 bis 3 dargestellte Ausführungsbeispiel auf. Dabei ist das Stützelement 41 jedoch mit zwei durchgehenden Ausnehmungen 42 versehen, in denen jeweils ein Dichtelement 43 angeordnet ist, das von jeweils einer Düsennadel 44 durchgriffen wird.

## Patentansprüche

1. Abstützvorrichtung zur Abstützung der Antriebszylinderplatte (5) auf der Heißkanalplatte (18) eines Heißkanalwerkzeugs zum Spritzen eines Kunststoffformteils mit einem Stützelement (26, 41), das von mindestens einer Düsennade (22, 44) des Heißkanalwerkzeugs in mindestens einer durchgehenden Ausnehmung (32, 42) mit radialem Spiel, bezogen auf die Längsachse der Düsennadel, (22, 44) durchgriffen wird,
**gekennzeichnet durch**
ein die Düsennadel (22; 44) im wesentlichen dichtend umgreifendes Dichtelement (27; 43), das mit radialem Spiel und insbesondere radial beweglich sowie axial im wesentlichen fixiert in der Ausnehmung (32; 42) des Stützelementes (26; 41) angeordnet ist.

2. Abstützvorrichtung nach Anspruch 1,
**dadurch gekennzeichnet,**
**dass** das Stützelement (26; 41) eine im wesentlichen topfartige Gestalt mit einem Boden (28) und einer den Boden (28) im wesentlichen geschlossen oder unterbrochen umlaufenden Zarge (29) aufweist, wobei die durchgehende Ausnehmung (32; 42) im Boden (28) des Stützelementes (26; 41) angeordnet ist.

3. Abstützvorrichtung nach Anspruch 1 oder 2,
**dadurch gekennzeichnet,**
**dass** das Stützelement (26; 41) eine im wesentlichen kreisförmige oder kreiszylindrische Gestalt aufweist.

4. Abstützvorrichtung nach einem der Ansprüche 1 bis 3,
**dadurch gekennzeichnet,**
**dass** die durchgehende Ausnehmung (32; 42) eine im wesentlichen kreisförmige Gestalt aufweist.

5. Abstützvorrichtung nach einem der Ansprüche 1 bis 4,
**gekennzeichnet,**
**durch** Mittel (30, 31) zur lösbaren Befestigung des Stützelementes (26; 41) an der Heißkanalplatte oder der Antriebszylinderplatte (5).

6. Abstützvorrichtung nach einem der Ansprüche 1 bis 5
**dadurch gekennzeichnet,**
**dass** die zur Heißkanalplatte (18) weisende Fläche (33) des Bodens (28) zumindest bereichsweise als Dichtfläche ausgebildet ist, die an der zur Antriebszylinderplatte (5) weisenden Fläche der Heißkanalplatte (18) im wesentlichen dichtend zur Anlage bringbar ist.

7. Abstützvorrichtung nach einem der Ansprüche 1 bis 6,
**dadurch gekennzeichnet,**
**dass** in der zur Heißkanalplatte (18) weisenden Fläche (33) des Bodens (28) eine absatzartige die durchgehende Ausnehmung (32; 42) im wesentlichen vollständig ringförmige umgreifende Vertiefung (34) ausgebildet ist.

8. Abstützvorrichtung nach einem der Ansprüche 1 bis 7,
**dadurch gekennzeichnet,**
**dass** das Dichtelement (27; 43) scheiben- oder buchsenförmig ausgebildet ist und einen Außendurchmesser aufweist, der zumindest geringfügig kleiner ist als der Innendurchmesser der durchgehenden Ausnehmung (32, 42).

9. Abstützvorrichtung nach Anspruch 8,
**dadurch gekennzeichnet,**
**dass** das Dichtelement (27; 43) einen bundartigen Ansatz (36) aufweist, dessen Außendurchmesser größer als der Innendurchmesser der Ausnehmung (32; 42) und zumindest geringfügig kleiner als der Durchmesser der ringförmigen Vertiefung (34) ist.

10. Abstützvorrichtung nach Anspruch 9,
**dadurch gekennzeichnet,**
**dass** die Höhe des bundartigen Ansatzes (37) zumindest geringfügig kleiner als die Tiefe der ringförmigen Vertiefung (34) ist.

11. Abstützvorrichtung nach einem der Ansprüche 1 bis 10.
**dadurch gekennzeichnet,**
**dass** die zur Heißkanalplatte (18) weisende Fläche des Dichtelementes (27; 43) zumindest bereichsweise als Dichtfläche ausgebildet ist.

12. Abstützvorrichtung nach einem der Ansprüche 1 bis 11,
**dadurch gekennzeichnet,**
**dass** in den zur Heißkanalplatte (18) weisenden Flächen des Dichtelementes (27; 43) und des Stützelementes (26; 41) jeweils mindestens ein Drainagekanal (38, 39) derart vorgesehen ist, dass eine gezielte Leckageverbindung zwischen der Düsennadel (22) und dem zwischen der Antriebszylinderplatte (5) und der Heißkanalplatte (18) vorgesehenen Raum gebildet wird.

13. Abstützvorrichtung nach Anspruch 12,
**dadurch gekennzeichnet,**
**dass** die Drainagekanäle (38, 39) im wesentlichen radial zur Düsennadelachse angeordnet sind und die zugeordneten Drainagekanäle (38, 39) von Dichtelement (27; 43) und Stützelement (26; 41) im wesentlichen fluchten.

14. Abstützvorrichtung nach Anspruch 11 oder 12.
**dadurch gekennzeichnet,**
**dass** eine Mehrzahl von Drainagekanälen (38, 39) im wesentlichen kreuz- oder sternförmig angeordnet sind.

15. Abstützvorrichtung nach einem der Ansprüche 1 bis 14,
**dadurch gekennzeichnet,**
**dass** das Stützelement (26; 41) aus einem Material mit schlechten Wärmeleiteigenschaften, insbesondere aus Titan, einer Titanlegierung oder aus Cr-Stahl besteht.

16. Abstützvorrichtung nach einem der Ansprüche 1 bis 15,
**dadurch gekennzeichnet,**
**dass** das Dichtelement (27, 43) im wesentlichen aus Stahl, insbesondere demselben Stahl wie die Düsennadel (22), besteht.

17. Werkzeug zum Spritzen von Kunststoffformteilen in Heisskanaltechnik mit einer Heißkanalplatte (18), in der mindestens ein Kanal (19) zur Zufuhr von spritzfähigem Kunststoff zu einer in ein Formnest mündenden Düse (24) angeordnet ist, einer Antriebszylinderplatte (5), in der eine Düsennadeleinrichtung derart gelagert ist, dass die Düsennadel (22, 44) mittels eines Antriebs aus einer ersten Stellung, in der die Düse (24) zumindest teilweise verschlossen ist, in eine zweite Stellung, in der die Düse (24) geöffnet ist, bringbar ist,
**gekennzeichnet durch**
mindestens eine die Antriebszylinderplatte (5) auf der Heißkanalplatte (5) zumindest teilweise abstützende Abstützvorrichtung (25) nach einem der Ansprüche 1 bis 16.

## Claims

1. A supporting device for supporting the drive cylinder plate (5) on the hot runner plate (18) of a hot runner mould for injection moulding a plastics moulding, having a supporting element (26, 41) through which at least one valve pin (22, 44) of the hot runner mould reaches into at least one through opening (32, 42) with radial play, as seen in relation to the longitudinal axis of the valve pin (22, 44),
**characterised by** a sealing element (27; 43) which reaches in substantially sealing manner around the valve pin (22; 44) and is arranged with radial play and such that it is in particular radially movable and axially substantially fixed in the opening (32; 42) in the supporting element (26; 41).

2. A supporting device according to Claim 1, **characterised in that** the supporting element (26; 41) is substantially cup-like in shape, with a base (28) and a frame (29) which surrounds the base (28) in substantially closed or interrupted manner, with the through opening (32; 42) arranged in the base (28) of the supporting element (26; 41).

3. A supporting device according to Claim 1 or 2, **characterised in that** the supporting element (26; 41) is substantially circular or cylindrical in shape.

4. A supporting device according to one of Claims 1 to 3, **characterised in that** the through opening (32; 42) is substantially circular in shape.

5. A supporting device according to one of Claims 1 to 4, **characterised by** means (30, 31) for detachably securing the supporting element (26; 41) to the hot runner plate or the drive cylinder plate (5).

6. A supporting device according to one of Claims 1 to 5, **characterised in that** the surface (33) of the base (28) facing the hot runner plate (18) is constructed at least in certain regions as a sealing surface which may be brought into abutment against the surface of the hot runner plate (18) facing the drive cylinder plate (5), in substantially sealing manner.

7. A supporting device according to one of Claims 1 to 6, **characterised in that** there is made in the surface (33) of the base (28) facing the hot runner plate (18) a shoulder-like depression (34) which surrounds the through opening (32; 42) in a substantially completely annular arrangement.

8. A supporting device according to one of Claims 1 to 7, **characterised in that** the sealing element (27; 43) is constructed to be disc-shaped or sleeve-shaped and has an external diameter that is at least slightly smaller than the internal diameter of the through opening (32; 42).

9. A supporting device according to Claim 8, **characterised in that** the sealing element (27; 43) has a collar-like attachment (36) whereof the external diameter is larger than the internal diameter of the opening (32; 42) and is at least slightly smaller than the diameter of the annular depression (34).

10. A supporting device according to Claim 9, **characterised in that** the height of the collar-like attachment (37) is at least slightly smaller than the depth of the annular depression (34).

11. A supporting device according to one of Claims 1 to 10, **characterised in that** the surface of the sealing element (27; 43) facing the hot runner plate (18) is constructed at least in certain regions as a sealing surface.

12. A supporting device according to one of Claims 1 to 11, **characterised in that**, in the surface of the sealing element (27; 43) and the surface of the supporting element (26; 41) that face the hot runner plate (18), there is provided in each case at least one drainage duct (38, 39) such that a deliberate leak connection is made between the valve pin (22) and the space between the drive cylinder plate (5) and the hot runner plate (18).

13. A supporting device according to Claim 12, **characterised in that** the drainage ducts (38, 39) are arranged substantially radially in relation to the axis of the valve pin, and the associated drainage ducts (38, 39) of the sealing element (27; 43) and the supporting element (26; 41) are substantially flush.

14. A supporting device according to Claim 11 or 12, **characterised in that** a plurality of drainage ducts (38, 39) are arranged substantially in a cross or star shape.

15. A supporting device according to one of Claims 1 to 14, **characterised in that** the supporting element (26; 41) is made from a material with poor thermal conduction properties, in particular titanium, a titanium alloy or Cr steel.

16. A supporting device according to one of Claims 1 to 15, **characterised in that** the sealing element (27, 43) is made substantially from steel, in particular the same steel as the valve pin (22).

17. A mould for injection moulding plastics mouldings by the hot runner system, having a hot runner plate (18) in which there is at least one runner (19) for supplying injection moulding plastics to a nozzle (24) which opens into a mould cavity, a drive cylinder plate (5) in which a valve pin device is mounted such that a drive may move the valve pin (22, 44) from a first position, in which the nozzle (24) is at least partly closed, into a second position, in which the nozzle (24) is open,
**characterised by** at least one supporting device (25) which at least partly supports the drive cylinder plate (5) on the hot runner plate (5), according to one of Claims 1 to 16.

## Revendications

1. Dispositif de soutien pour le soutien de la plaque de cylindre d'entraînement (5) sur la plaque à canal chaud (18) d'un outil à canal chaud pour l'injection d'une partie moulée en plastique avec un élément de soutien (26, 41), qui est traversée par au moins une aiguille de buse (22, 44) de l'outil à canal chaud dans au moins un évidement (32, 42) continu avec un jeu radial, par rapport à l'axe longitudinal de l'aiguille de buse (22, 44),
**caractérisé par**
un élément d'étanchéité (27 ; 43) entourant l'aiguille de buse (22 ; 44) de façon sensiblement étanche, qui est disposé avec du jeu radial et en particulier de façon mobile radialement et largement fixé axialement dans l'évidement (32 ; 42) de l'élément d'appui (26 ; 41).

2. Dispositif de soutien selon la revendication 1,
**caractérisé en ce que**
l'élément d'appui (26 ; 41) présente une forme sensiblement en forme de pot avec un fond (28) et un châssis (29) entourant le fond (28) sensiblement de façon fermée ou interrompue, l'évidement (32 ; 42) continu étant disposé dans le fond (28) de l'élément d'appui (26 ; 41).

3. Dispositif de soutien selon la revendication 1 ou 2,
**caractérisé en ce que**
l'élément d'appui (26 ; 41) présente une forme sensiblement circulaire ou cylindrique circulaire.

4. Dispositif de soutien selon l'une quelconque des revendications 1 à 3,
**caractérisé en ce que**
l'évidement (32 ; 42) continu présente une forme sensiblement circulaire.

5. Dispositif de soutien selon l'une quelconque des revendications 1 à 4,
**caractérisé**
**par** des moyens (30, 31) pour la fixation amovible de l'élément d'appui (26 ; 41) sur la plaque à canal chaud ou la plaque de cylindre d'entraînement (5).

6. Dispositif de soutien selon l'une quelconque des revendications 1 à 5,
**caractérisé en ce que**
la surface (33), dirigée vers la plaque à canal chaud (18), du fond (28) est conçue au moins par endroits sous forme de surface d'étanchéité qui est amenée en appui de façon sensiblement étanche sur la surface, dirigée vers la plaque de cylindre d'entraînement (5), de la plaque à canal chaud (18).

7. Dispositif de soutien selon l'une quelconque des revendications 1 à 6,
**caractérisé en ce que**,
dans la surface (33), dirigée vers la plaque à canal chaud (18), du fond (28) est réalisée une cavité (34) de type décrochement, entourant l'évidement (32 ; 42) continu avec une forme sensiblement complètement annulaire.

8. Dispositif de soutien selon l'une quelconque des revendications 1 à 7,
**caractérisé en ce que**
l'élément d'étanchéité (27 ; 43) est conçu en forme de disque ou de manchon et présente un diamètre extérieur qui est au moins légèrement inférieur au diamètre intérieur de l'évidement (32 ; 42) continu.

9. Dispositif de soutien selon la revendication 8,
**caractérisé en ce que**
l'élément d'étanchéité (27 ; 43) présente une embase (36) de type collerette, dont le diamètre extérieur est supérieur au diamètre intérieur de l'évidement (32 ; 42) et au moins légèrement inférieur au diamètre de la cavité (34) de forme annulaire.

10. Dispositif de soutien selon la revendication 9,
**caractérisé en ce que**
la hauteur de l'embase (37) de type collerette est au moins légèrement inférieure à la profondeur de la cavité (34) de forme annulaire.

11. Dispositif de soutien selon l'une quelconque des revendications 1 à 10,
**caractérisé en ce que**
la surface, dirigée vers la plaque à canal chaud (18), de l'élément d'étanchéité (27 ; 43) est conçue au moins par endroits sous forme de surface d'étanchéité.

12. Dispositif de soutien selon l'une quelconque des revendications 1 à 11,
**caractérisé en ce que**,
dans chacune des surfaces, dirigées vers la plaque à canal chaud (18), de l'élément d'étanchéité (27 ; 43) et de l'élément de soutien (26 ; 41) est prévu au moins un canal de drainage (38, 39) de telle sorte qu'une liaison de fuite adéquate est formée entre l'aiguille de buse (22) et l'espace prévu entre la plaque de cylindre d'entraînement (5) et la plaque à canal chaud (18).

13. Dispositif de soutien selon la revendication 12,
**caractérisé en ce que**
les canaux de drainage (38, 39) sont disposés sensiblement radialement à l'axe de l'aiguille de buse et les canaux de drainage (38, 39) attribués de l'élément d'étanchéité (27 ; 43) et de l'élément d'appui (26 ; 41) sont sensiblement alignés.

14. Dispositif de soutien selon la revendication 11 ou 12,
**caractérisé en ce que**
une pluralité de canaux de drainage (38, 39) est disposée en forme de croix ou d'étoile.

15. Dispositif de soutien selon l'une quelconque des revendications 1 à 14,
**caractérisé en ce que**
l'élément de soutien (26 ; 41) est réalisé à base d'un matériau présentant de mauvaises propriétés de conduction thermique, en particulier à base de titane, d'un alliage de titane ou d'acier au chrome.

16. Dispositif de soutien selon l'une quelconque des revendications 1 à 15,
**caractérisé en ce que**
l'élément d'étanchéité (27, 43) est réalisé largement en acier, en particulier dans le même acier que l'aiguille de buse (22).

17. Outil pour l'injection de pièces moulées en plastique dans la technique de canal chaud comprenant une plaque à canal chaud (18), dans laquelle est disposé au moins un canal (14) pour l'arrivée de plastique moulable à une buse (24) débouchant dans un nid de moulage, une plaque de cylindre de travail (5), dans laquelle un dispositif d'aiguille de buse est logé de telle sorte que l'aiguille de buse (22) peut être amenée au moyen d'un entraînement d'une première position, dans laquelle la buse (24) est au moins partiellement fermée, dans une seconde position dans laquelle la buse (24) est ouverte,
**caractérisé par**
au moins un dispositif de soutien (25) soutenant au moins partiellement la plaque de cylindre d'entraînement (5) sur la plaque à canal chaud (5) selon l'une quelconque des revendications 1 à 16.
